Europäisches Patentamt

European Patent Office

Office européen des brevets

(19)

(11) Veröffentlichungsnummer : **0 087 614**
**B1**

(12) **EUROPÄISCHE PATENTSCHRIFT**

(45) Veröffentlichungstag der Patentschrift :
06.07.88

(21) Anmeldenummer : 83101125.9

(22) Anmeldetag : 07.02.83

(51) Int. Cl.⁴ : **G 02 B  5/22**, C 03 C 17/34,
**G 02 B  1/10**, G 02 B  5/28

(54) **Optisches Element.**

(30) Priorität : 01.03.82 CH 1234/82

(43) Veröffentlichungstag der Anmeldung :
07.09.83 Patentblatt 83/36

(45) Bekanntmachung des Hinweises auf die Patenterteilung : 06.07.88 Patentblatt 88/27

(84) Benannte Vertragsstaaten :
**BE DE FR GB IT NL SE**

(56) Entgegenhaltungen :
GB-A-  682 264
GB-A- 1 484 284
GB-A- 2 027 223
PATENTS ABSTRACTS OF JAPAN, Band 5, Nr. 177 (P-89) [849], 13. November 1981; & JP - A - 56 106 202
(TOKYO KOUGAKU KIKAI K.K.) 24.08.1981
APPLIED OPTICS, Band 12, Nr. 2, Februar 1973,
Seiten 394-397, New York, US; W. HEITMANN: "Reactively evaporated films of Scandia and Yttria"
JOURNAL OF THE ELECTROCHEMICAL SOCIETY,
Band 129, Nr. 10, Oktober 1982, Seiten 2389-2390,
Princetown, US; J.C. MARINACE et al.: "Titanium dioxide films to improve photoresist adhesion"

(73) Patentinhaber : **BALZERS AKTIENGESELLSCHAFT**
**FL-9496 Balzers (LI)**

(72) Erfinder : **Thöni, Werner, Dr.**
**Im Zogg**
**CH-7304 Maienfeld (CH)**
Erfinder : **Huber, Peter, Dr.**
**Marschallgut**
**CH-7304 Maienfeld (CH)**
Erfinder : **Hohenegger, Karl**
**Ramschwagweg 850**
**FL-9496 Balzers (LI)**

**0 087 614**

**Beschreibung**

Die Erfindung betrifft optische Elemente, welche auf einer infrarotdurchlässigen Unterlage aus einem Material der Gruppe : Germanium, Zinkselenid, Zinksulfid und Chalkogenidgläser, ein System aus mehreren infrarotdurchlässigen optisch wirksamen dünnen Schichten aus Substanzen der Gruppe : Germanium, Zinkselenid, Zinksulfid, Chalkogenidglsäser, Thoriumfluorid, Yttriumfluorid und Praseodymfluorid aufweisen.

Derartige Elemente werden z. B. in Form von infrarotdurchlässigen Linsen mit reflexionsverminderndem Belag, als Schmalbandtransmissionsfilter und als Polarisationsfilter für Infrarot verwendet. Dabei stellt die Haftung der Schichtsysteme auf den Unterlagen und der Schichten untereinander häufig immer noch ein Problem dar ; bei Infrarotschichtsystem insbesondere deshalb, weil sowohl die genannten infrarotdurchlässigen Unterlagen als auch die Schichtmaterialien einerseits gegen Luftfeuchtigkeit und Oxydation mehr oder weniger empfindlich sind und andererseits die bekannten infrarotdurchlässigen Schichtmaterialien oft hohe Schichtspannungen zeigen.

Die Haftung von Schichten auf Unterlagen durch sogenannte Haftschichten zu verbessern, die zwischen der Unterlage und dem Schichtsystem angeordnet und so dünn sind, dass die Haftschichten selbst die Funktion des optischen Elementes nicht stören, ist bekannt. Für optische Elemente für den sichtbaren Spektralbereich sind vor allem Haftschichten aus Oxiden schon vielfach verwendet worden.

Schwieriger ist die Situation im Falle optischer Elemente für den IR-Bereich, insbesondere für einige neuere Anwendungen, bei denen auf IR-durchlässigen Unterlagen Schichtsysteme aus sehr vielen — bis zu 50 — Einzelschichten aufgebracht werden. Der Grund für die Schwierigkeit liegt darin, dass die als Haftschichten in Frage kommenden Materialien meist eine verhältnismässig starke Absorption besitzen, letzteres besonders dann, wenn sie Feuchtigkeit aufgenommen haben und damit $H_2O$-Absorptionsbanden aufweisen. Ganz besonders ins Gewicht fallen Absorptionsverluste bei Laserspiegeln, die bei einem möglichst hohen Reflexionsvermögen eine möglichst geringe Absorption besitzen müssen, um hohen Ausgangsintensitäten des Laserstrahls standzuhalten.

Es ist bekannt, bei auf Germaniumunterlagen aufzubringenden IR-Schichtsystemen eine bessere Haftung zwischen der Unterlage und dem Schichtsystem dadurch zu erreichen, dass eine Haftschicht aus Germanium, die nur wenige Atomlagen dick zu sein braucht, eingeschaltet wird. Ferner bekannt sind für optische Elemente auch Schutzschichten, welche aus dem Dampf siliziumorganischer Verbindungen mittels einer elektrischen Glimmentladung auf den zu schützenden Flächen niedergeschlagen werden.

Die vorliegende Erfindung stellt sich die Aufgabe, für optische Elemente der eingangs genannten Art (d. h. beschränkt auf die dort erwähnten Unterlagen und Schichtmaterialien) anzugeben, wie eine besser Haftung des Schichtsystems auf der Unterlage und in weiterer Ausgestaltung der Erfindung auch zwischen den einzelnen Schichten des Systems unter sich erreicht werden kann. Es wurde gefunden, dass erstgenannte Hauptaufgabe einwandfrei dadurch gelöst wird, dass zwischen der Unterlage und der dieser benachbarten optisch wirksamen Schicht eine höchstens 100 nm dicke Zwischenschicht aus einem Material der Gruppe : Hafniumoxid, Yttriumoxid und Scandiumoxid angeordnet wird. Zur besseren Bindung der Schichten unter sich wird empfohlen, auch zwischen diesen eine Zwischenschicht aus einem der genannten Oxide vorzusehen.

Nachfolgend werden einige Ausführungsbeispiele der Erfindung anhand der anliegenden Zeichnungen näher beschrieben.

Es zeigt :

Figur 1 schematisch den Aufbau eines optischen Elementes bestehend aus einer Unterlage aus einem Chalkogenidglas und einen darauf aufgebrachten schmalbandigen reflexionsvermindernden Schichtsystem, zusammen mit der Reflexionskurve dieses optischen Elementes ;

Figur 2 den schematischen Schichtaufbau eines optischen Elementes mit Germaniumunterlage und Breitbandreflexionsverminderung zusammen mit der entsprechenden Reflexionskurve.

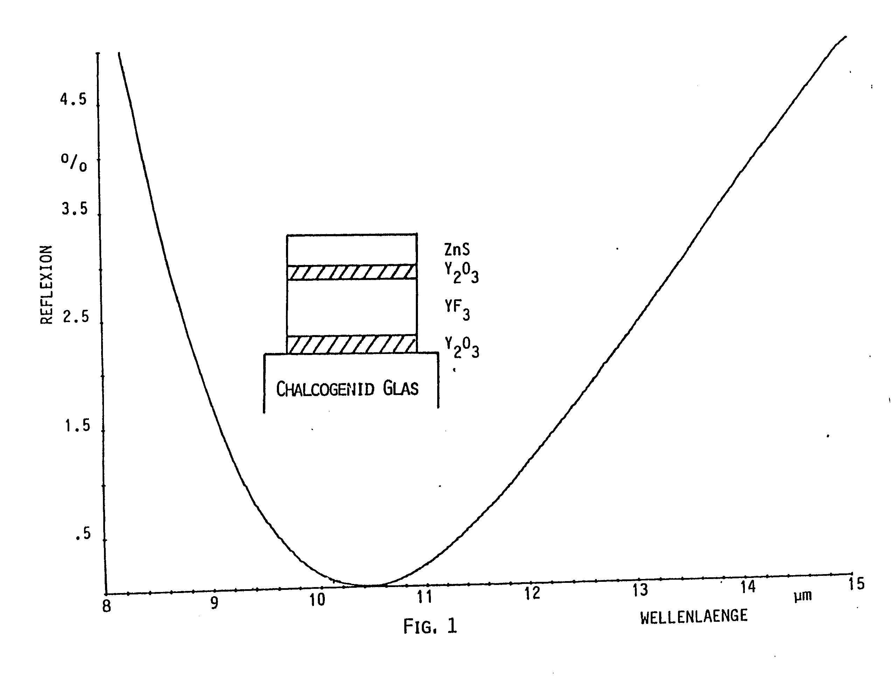

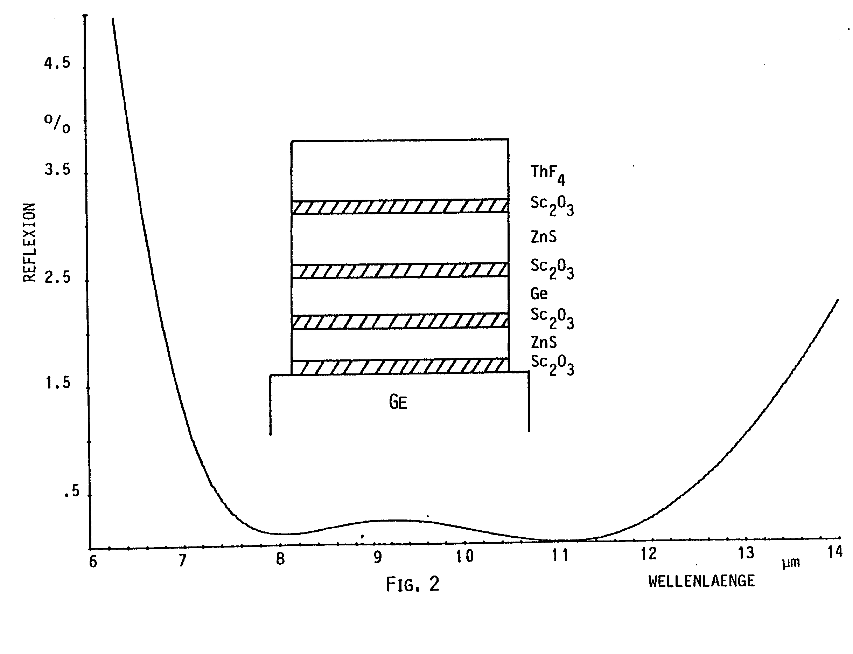

In den untenstehenden Tabellen sind die Materialien, Brechwerte und optischen Dicken verschiedener Ausführungsbeispiele der Erfindung angegeben, ebenso die laufende Nummer jeder Schicht, wobei die an Luft angrenzende mit Nummer 1 bezeichnet wurde, sodass also die an die Unterlage anliegende Schicht die höchste laufende Nummer aufweist. Die Tabellen 1 und 2 entsprechen den Ausführungsbeispielen der Figuren 1 und 2.

Zu den verwendeten Schichtmaterialien sei noch folgendes bemerkt : die niederbrechenden Materialien Thoriumfluorid ($ThF_4$) Yttriumfluorid ($YF_3$) und Praseodymfluorid ($PrF_3$) weisen fast gleiche Brechwerte auf (1,35 bzw. 1,35 bzw. 1,40 bei Lambda = 10 μm) und können in den vorerwähnten Beispielen einander ersetzen. Dasselbe gilt auch für die haftvermittelnden Schichten Hafniumoxid ($HfO_2$, n = 1.80) Yttriumoxid ($Y_2O_3$, n = 1.7) und Scandiumoxid ($Sc_2O_3$, n = 1.75). Die drei letztgenannten Haftschichtmaterialien besitzen wegen ihrer besonderen Eignung für die Infrarot-Optik eine Sonderstellung unter den ansich allgemein als Haftschichtmaterialien bekannten Oxiden. Ihre Gleichwertigkeit für den Zweck der Erfindung geht so weit, dass sie in den Ausführungsbeispielen beliebig gegeneinander ausgetauscht werden können, ohne dass die Eigenschaften des Schichtsystems dadurch wesentlich geändert werden ; man erhält also auf diese Weise neue Ausführungsbeispiele der Erfindung. Die Brechwerte der aus diesen Materialien hergestellten Schichten können aber je nach Herstellungsverfahren von den angegebenen Werten ein wenig abweichen, jedoch können diese Abweichungen bei der Berechnung der Schichtsysteme durch den Fachmann leicht berücksichtig werden.

Unter Chalkogenidgläsern werden im Rahmen der vorliegenden Erfindung Gläser verstanden, wie sie in

i) A.R. Hilton, D.J. Hayes, M.D. Rechtin
Infrared Absorption of some high purity Chalcogenide glasses.
J. Noncryst. Solids 17, 319 (1975)
ii) A.R. Hilton, C.E. Jones, M. Brau
Non oxide IVA-VA-VIA chalcogenide glasses
Part I, Part II, Part III
Phys. Chem. of Glasses 7, 105, 112, 116 (1966)

beschrieben worden sind.

Unter « optischer Dicke » einer Schicht wird das Produkt aus dem Brechwert des Schichtmaterials und der wirklichen Schichtdicke verstanden ; wo nicht ausdrücklich von « optischer Dicke » gesprochen wird, ist die wirkliche Schichtdicke, gemessen in $\mu$m oder nm, gemeint.

Tabelle 1     (Beispiel der Figur 1)

Schmalband-Reflexverminderung auf einem Chalkogenid-Glas (Brechwert 2.49)

| Nr. | Material | Brechwert | opt. Dicke $\mu$m |
|---|---|---|---|
| | Luft | 1.00 | |
| 1 | ZnS | 2.22 | 0.650 |
| 2 | $Y_2O_3$ | 1.70 | 0.050 |
| 3 | $YF_3$ | 1.35 | 1.238 |
| 4 | $Y_2O_3$ | 1.70 | 0.050 |
| | Unterlage | 2.49 | |

Tabelle 2     (Beispiel der Figur 2)

Breitband-Reflexverminderung auf Germanium (Brechwert 4.00)

| Nr. | Material | Brechwert | opt. Dicke $\mu$m |
|---|---|---|---|
| | Luft | 1.0 | |
| 1 | $ThF_4$ | 1.35 | 2.000 |
| 2 | $Sc_2O_3$ | 1.70 | 0.050 |
| 3 | ZnS | 2.22 | 1.563 |
| 4 | $Sc_2O_3$ | 1.70 | 0.050 |
| 5 | Ge | 4.15 | 0.525 |
| 6 | $Sc_2O_3$ | 1.70 | 0.050 |
| 7 | ZnS | 2.22 | 0.400 |
| 8 | $Sc_2O_3$ | 1.70 | 0.050 |
| | Unterlage | 4.00 | |

0 087 614

Tabelle 3

Beamsplitter auf Zinkselenid (n = 2.42) für einen Einfallswinkel von 45°

| Nr. | Material | Brechwert | opt. Dicke $\mu$m |
|---|---|---|---|
|  | Luft | 1.0 |  |
| 1 | $ThF_4$ | 1.35 | 2.935 |
| 2 | $Sc_2O_3$ | 1.70 | 0.055 |
| 3 | Ge | 4.15 | 0.444 |
| 4 | $Sc_2O_3$ | 1.70 | 0.055 |
| 5 | $ThF_4$ | 1.35 | 1.115 |
| 6 | $Sc_2O_3$ | 1.70 | 0.055 |
| 7 | Ge | 4.15 | 0.926 |
| 8 | $Sc_2O_3$ | 1.70 | 0.055 |
| 9 | $ThF_4$ | 1.35 | 1.115 |
| 10 | $Sc_2O_3$ | 1.70 | 0.055 |
| 11 | Ge | 4.15 | 0.926 |
| 12 | $Sc_2O_3$ | 1.70 | 0.055 |
| 13 | $ThF_4$ | 1.35 | 1.115 |
| 14 | $Sc_2O_3$ | 1.70 | 0.055 |
| 15 | Ge | 4.15 | 0.926 |
| 16 | $Sc_2O_3$ | 1.70 | 0.055 |
|  | Unterlage | 2.42 |  |

Tabelle 4

Longpass-Filter auf Germanium (Brechwert 4.00)

| Nr. | Material | Brechwert | opt. Dicke $\mu$m |
|---|---|---|---|
|  | Luft | 1.00 |  |
| 1 | $YF_3$ | 1.35 | 2.500 |
| 2 | $Y_2O_3$ | 1.70 | 0.050 |
| 3 | Ge | 4.15 | 1.000 |
| 4 | $Y_2O_3$ | 1.70 | 0.050 |
| 5 | $YF_3$ | 1.35 | 1.000 |
| 6 | $Y_2O_3$ | 1.70 | 0.050 |
| 7 | Ge | 4.15 | 1.000 |
| 8 | $Y_2O_3$ | 1.70 | 0.050 |
| 9 | $YF_3$ | 1.35 | 1.000 |
| 10 | $Y_2O_3$ | 1.70 | 0.050 |
| 11 | Ge | 4.15 | 1.000 |
| 12 | $Y_2O_3$ | 1.70 | 0.050 |
| 13 | $YF_3$ | 1.35 | 1.000 |
| 14 | $Y_2O_3$ | 1.70 | 0.050 |
| 15 | Ge | 4.15 | 0.940 |

4

Tabelle 4   (Fortsetzung)

| Nr. | Material | Brechwert | opt. Dicke μm |
|---|---|---|---|
|  | Luft | 1.00 |  |
| 16 | Y$_2$O$_3$ | 1.70 | 0.050 |
| 17 | ZnS | 2.22 | 0.980 |
| 18 | Y$_2$O$_3$ | 1.70 | 0.050 |
|  | Unterlage | 4.00 |  |

Tabelle 5

Breitbandpolarisator auf Zinkselenid (Brechwert 2.42) für einen Einfallswinkel von 45°

| Nr. | Material | Brechwert | opt. Dicke μm |
|---|---|---|---|
|  | Luft | 1.00 |  |
| 1 | PrF$_3$ | 1.35 | 1.200 |
| 2 | HfO$_2$ | 1.70 | 0.055 |
| 3 | ZnS | 2.22 | 0.566 |
| 4 | HfO$_2$ | 1.70 | 0.055 |
| 5 | PrF$_3$  } G | 1.35 | 1.186 |
| 6 | HfO$_2$ | 1.70 | 0.055 |
| 7 | ZnS | 2.22 | 1.092 |
| 8 | HfO$_2$ | 1.70 | 0.055 |
| 9 | PrF$_3$  } G | 1.35 | 1.186 |
| 10 | HfO$_2$ | 1.70 | 0.055 |
| 11 | ZnS | 2.22 | 1.092 |
| 12 |  |  |  |
|  | 4xG |  |  |
| 27 |  |  |  |
| 28 | HfO$_2$ | 1.70 | 0.055 |
| 29 | PrF$_3$ | 1.35 | 1.186 |
| 30 | HfO$_2$ | 1.70 | 0.055 |
| 31 | ZnS | 2.22 | 1.567 |
| 32 | HfO$_2$ | 1.70 | 0.055 |
|  | Unterlage | 2.42 |  |

In den beschriebenen Ausführungsbeispielen ist nicht nur zwischen der Unterlage und dem Schichtsystem eine haftvermittelnde Schicht eingebaut sondern stets auch zwischen den einzelnen optisch wirksamen Schichten. Letzteres ist jedoch nicht unbedingt in allen Fällen notwendig. Vielfach genügt es, eine Haftschicht lediglich zwischen Unterlage und Schichtsystem anzuordnen oder dann haftvermittelnde Schichten nur zwischen bestimmten Einzelschichten des Systems vorzusehen ; dies hängt im gegebenen Fall von der Schichtzahl des Systems und von den Schichtmaterialien ab.

**Patentansprüche**

1. Optisches Element, welches auf einer infrarotdurchlässigen Unterlage aus einem Material der Gruppe : Germanium, Zinkselenid, Zinksulfid und Chalkogenidgläser, ein System aus mehreren infrarotdurchlässigen optisch wirksamen dünnen Schichten aus Substanzen der Gruppe : Germanium, Zinkselenid, Zinksulfid, Chalkogenidgläser, Thoriumfluorid, Yttriumfluorid und Praseodymfluorid aufweist, dadurch gekennzeichnet, dass zwischen der Unterlage und der dieser benachbarten optisch wirksamen Schicht eine höchstens 100 nm dicke Zwischenschicht aus einem Material der Gruppe : Hafniumoxid, Yttriumoxid und Scandiumoxid angeordnet ist.

**0 087 614**

2. Optisches Element nach Anspruch 1, dadurch gekennzeichnet, dass die Zwischenschicht eine Schichtdicke von 30 nm ± 10 % besitzt.

3. Optisches Element nach Anspruch 1, dadurch gekennzeichnet, dass zwischen den optisch wirksamen Schichten Zwischenschichten aus einem Material der Gruppe : Hafniumoxid, Yttriumoxid und Scandiumoxid vorgesehen sind.

## Claims

1. Optical element comprising on a infrared transparent substrate made from a material chosen from the group : germanium, zinc selenide, zinc sulfide and chalkogenous glasses a system consisting of a plurality of infrared transparent optically active thin layers made from substances chosen from the group : germanium, zinc selenide, zind sulfide, chalkogenous glasses, thorium fluoride, yttrium fluoride and praseodym fluoride, characterized in that an intermediate a material chosen from the group : hafnium oxide, yttrium oxide and scandium oxide is arranged between said substrate und said neighbouring optically active layer.

2. Optical element according to claim 1, characterized in that said intermediate layer has a thickness of 30 nm ± 10 %.

3. Optical element according to claim 1, characterized in that intermediate layers comprising a material chosen from the group : hafnium oxide, yttrium oxide, and scandium oxide are arranged between said optically active layers.

## Revendications

1. Elément optique contenant sur un support transparent pour l'infrarouge produit d'un matériel choisi du groupe : germanium, séléniure de zinc, sulfure de zinc, verres chalkogènes, un système de plusieurs couches minces transparentes pour l'infrarouge et optiquement actives produites de substances choisis du groupe : germanium, séléniure de zinc, sulfure de zinc, verres chalkogènes, fluorure de thorium, fluorure d'yttrium et fluorure de praséodyme, caractérisé en ce que une couche intermédiaire mesurant au maximum 100 nm en épaisseur faite d'un matériel choisi du groupe : oxide de hafnium, oxide d'yttrium et oxide de scandium est localisée entre ledit support et ladite couche voisine optiquement active.

2. Elément optique selon la revendication 1, caractérisé en ce que ladite couche intermédiaire a une épaisseur de 30 nm ± 10 %.

3. Elément optique selon la revendication 1, caractérisé en ce que des couches intermédiaires d'un matériel choisi du groupe : oxide de hafnium, oxide d'yttrium et oxide de scandium sont localisées entre lesdites couches optiquement actives.

FIG. 1

FIG. 2